# EUROPEAN PATENT SPECIFICATION

(11) **EP 0 563 438 B1**
(45) Date of publication and mention of the grant of the patent: **11.11.1998**
(21) Application number: 92116146.9
(22) Date of filing: 21.09.1992
(51) Int. Cl.: H04N 1/10

(54) **Portable image input equipment**
Tragbares Bildeingabegerät
Equipement portable d'entrée d'image

(30) Priority: 30.03.1992 JP 105440/92; 30.04.1992 JP 139717/92
(43) Date of publication of application: 06.10.1993
(73) Proprietor: ELMO Co., Ltd., Nagoya-shi, Aichi-ken (JP)
(72) Inventor: Mizuno, Takayoshi, 16-101, Naruko-jutaku, Nagoya-shi, Aichi-ken (JP); Yamamori, Motohiko, Kasugai-shi, Aichi-ken (JP)
(74) Representative: Goddar, Heinz J., Dr.

(56) References cited:
- US-A- 4 588 271
- US-A- 4 916 550
- US-A- 4 938 587
- PATENT ABSTRACTS OF JAPAN vol. 13, no. 391 (P-926)30 August 1989 & JP-A-01 140 137 ( FUJITSU LTD. ) 1 June 1989

## Description

### BACKGROUND OF THE INVENTION

The present invention relates to an image input equipment, and more particularly to the image input equipment which comprises a camera head having an optical system and an image pickup means converting an optical image to a video signal, and a document stage on which an object, such as a pamphlet and a book, is to be put.

The image input equipment transmits the video signal of the object inputted by the camera head to a monitor television.

JP-A-1-316075 discloses the type of the portable image input equipment.

This image input equipment comprises a document stage on which an object is to be put, an expansion arm assembled movably on the document stage, and a camera head mounted to an end of the arm. The image input equipment is so constructed that the arm and a video camera can be folded down to the document stage for carrying and storing the image input equipment, and can be raised from the document stage for setting the image input equipment.

According to a structure of the conventional image input equipment, the arm and the camera head can be folded down to the document stage for carrying and storing the image input equipment.

However, since the camera head is bulky and the arm is long and narrow, the camera head and the arm, in combination, form an uneven surface on the document stage of a flat shape, Thus, when folded, the image input equipment forms a complicated shape, which causes inconvenience for carrying and storing the image input equipment.

Patent abstracts of Japan, Vol. 13, No. 391 (P-926), & JP-A-0 140 137 discloses a structure of an overhead projector whereby a lamp house is folded into the space adjacent of an arm of the apparatus.

A further foldable, portable optical instrument has been disclosed in US 4 916 550. The illumination units that are needed for illuminating the material on the document stage are mounted to supporting structures for rising-up and folding-down movement to support the illumination units upwardly with respect to the document stage when the support for the camera head is raised up.

The arrangement of the illumination units, however, is complicated, since a construction with poles and arms is needed to bring the illumination units above the document stage and to insure a proper illumination in terms of light intensity and illumination angle.

### SUMMARY OF THE INVENTION

In view of the foregoing, it is the main object to provide an image input equipment which can be folded up into a flat shape, comprising an illumination unit that provides good illumination results and which can be handled comfortably during processing and folding.

The image input equipment is defined by comprising a camera head having an optical system and an image pickup means converting an optical image to a video signal, a document stage on which an object is to be put, a pair of arms assembled movably on the document stage to be folded down to the document stage and to be raised from the document stage, and a space comparted by a pair of the arms, in an arrangement as defined in patent claim 1.

According to the above structure, the camera head can be folded down into the space and the arms can be folded down to the stage.

Therefore, the image input equipment can be folded into a flat shape, which causes convenience for carrying and storing the image input equipment.

### BRIEF DESCRIPTION OF THE DRAWINGS

Fig. 1 is a perspective view of an image input equipment of an embodiment of the present invention, as viewed from a front side of the image input equipment.

Fig.2 is a front view illustrating a state in which the image input equipment is set up.

Fig.3 is a partially fragmentary side view illustrating a state in which the image input equipment is set up.

Fig.4 is a fragmentary side view illustrating a state in which the image input equipment is set up.

Fig.5 is a perspective view illustrating a state in which the image input equipment is set up, as viewed from a back side of the image input equipment.

Fig.6 is a perspective view illustrating a state in which the image input equipment is folded up.

Fig.7 is a side view illustrating a state in which the image input equipment is folded up.

Fig.8 is a sectional view illustrating a first embodiment of a locking mechanism of the image input equipment.

Fig.9 is a partially enlarged view illustrating a connection between a camera head and an arm.

Fig.10 is an exploded perspective view illustrating the camera head of the image input equipment.

Fig.11 is an exploded perspective view illustrating a first embodiment of an illuminator.

Fig.12 is an exploded perspective view illustrating a second embodiment of the illuminator.

Fig.13 is a perspective view illustrating a second embodiment of an essential part of the locking mechanism of the image input equipment.

### DETAILED DESCRIPTION OF THE PREFERRED EMBODIMENT

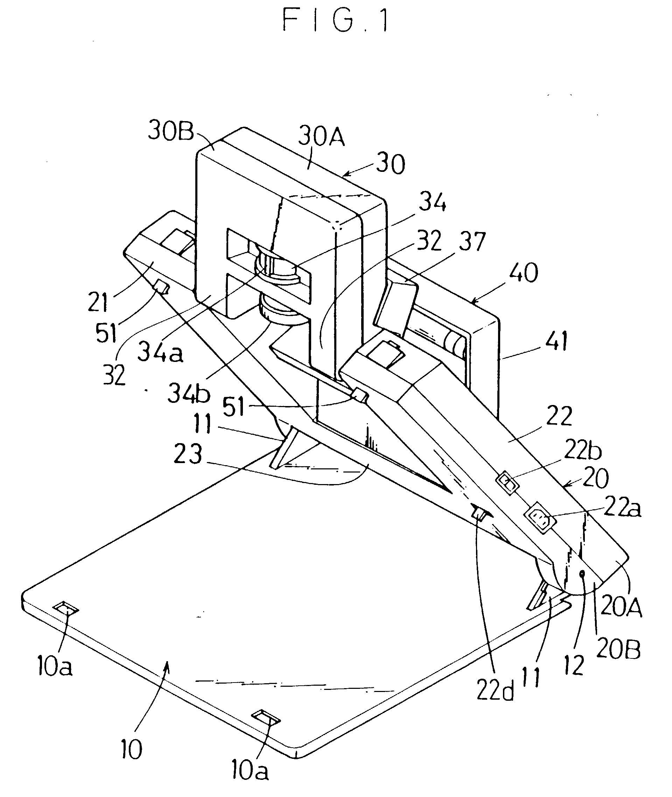

Referring now to Fig.1 to Fig.7 there is shown therein an embodiment of an image input equipment as disclosed in the present application.

Fig.1 to Fig.5 illustrate states in which the image input equipment is set up.

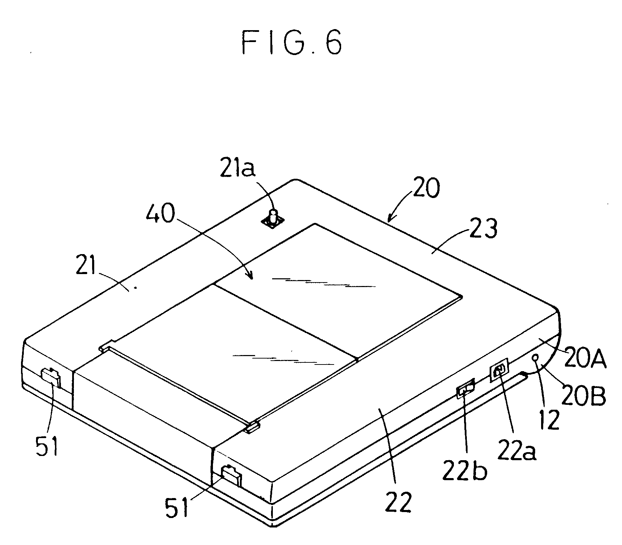

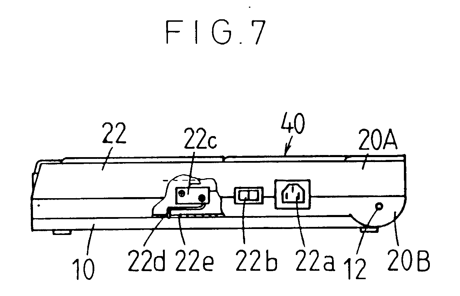

Fig.6 and Fig.7 illustrate states in which the image input equipment is folded up.

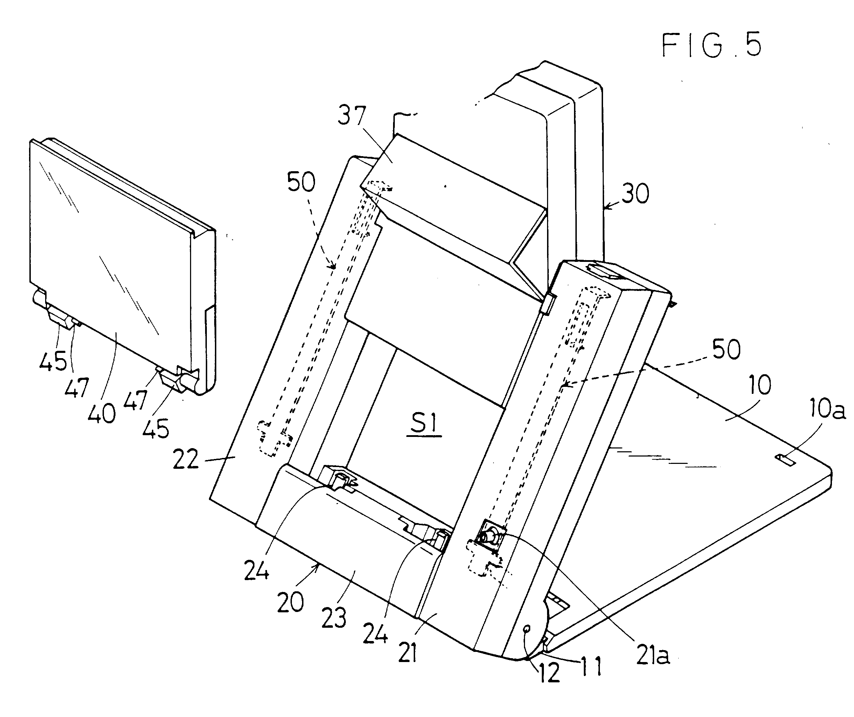

The image input equipment comprises a rectangular plate-shaped document stage 10, a U-shaped frame 20 of a follow structure, a camera head 30, and an illuminator 40. The U-shaped frame 20 is composed of a pair of arms 21 and 22, and a base 23 connecting lower ends of the arms 21 and 22. The arms 21 and 22 and the base 23 compart a space S1 (see Fig.5), into which the camera head 30 is to be folded down.

The camera head 30 is mounted to upper ends of the arms 21 and 22. The illuminator 40 is mounted to the base 23.

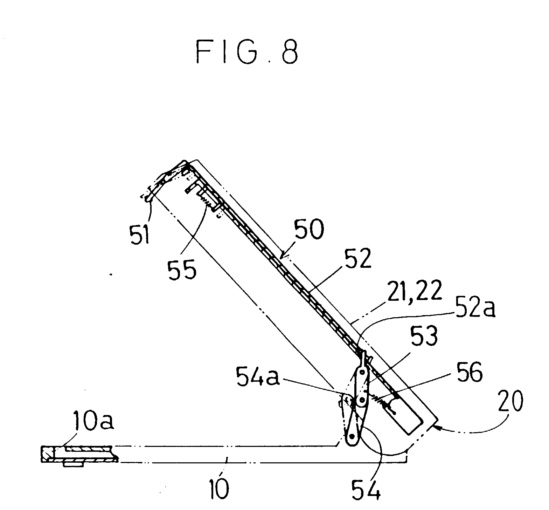

The U-shaped frame 20 is constructed by uniting an upper frame 20A with a lower frame 20B. The U-shaped frame 20 has a locking mechanism 50 (see Fig.8) and circuit 61 to 63 built therein.

The arm 21 has a terminal 21a (see Fig. 6) on an upper face thereof, the terminal 21a to connect with a cord of monitor television (not illustrated).

Meanwhile, the arm 22 has a plug 22a and a power switch 22b on an outer side thereof, the plug 22a to connect with a power cord.

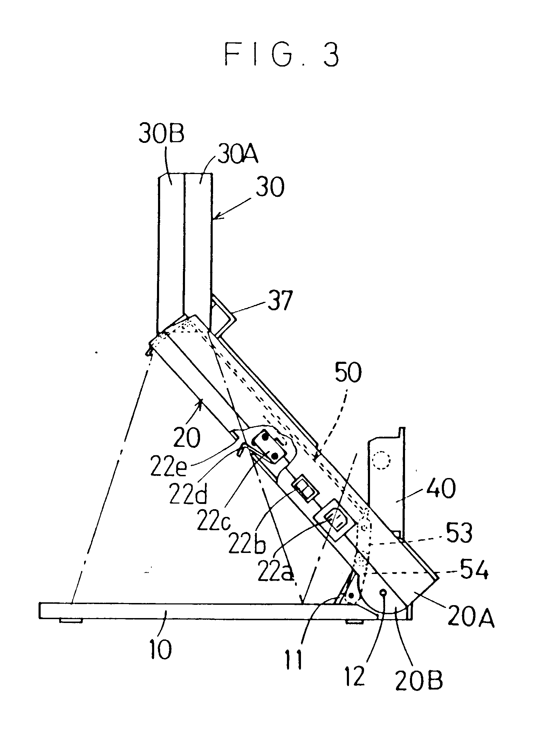

Further, the arm 22 has a micro-switch 22c (see Fig.3) on a bottom thereof.

The base 23 of the U-shaped frame 20 is assembled at brackets 11 secured to both corners of rear sides of the document stage 10 with hinge pins 12 so that the arms 21 and 22 can move upward and downward.

Accordingly, on folding the image input equipment, the arms 21 and 22 can be folded down to the document stage 10. On setting the image input equipment, the arms 21 and 22 can be raised through a required angle relative to the document stage 10.

A length and a breadth of the U-shaped frame 20 are designed to conform to those of the document stage 10.

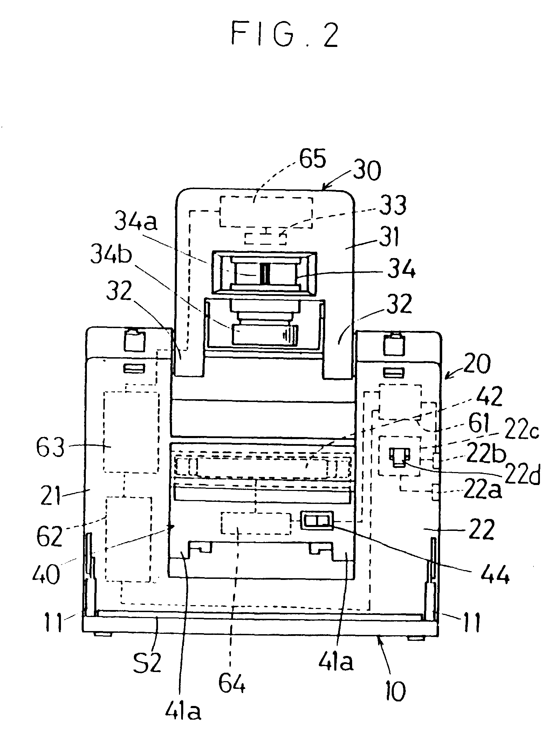

Meanwhile, the base 23 and the document stage 10 form a passage S2 (see Fig.2).

As illustrated in Fig.8, the locking mechanism 50 is built into the arms 21 and 22, respectively. The locking mechanism 50 comprises a locking lever 51, a rod 52, a first link lever 53, and a second link lever 54, the locking lever 51 engaging with or disengaging from a concave 10a formed at an end of the document stage 10, the rod 52 assembled in such a manner to be movable along a longitudinal direction of the arms 21 and 22, the first link lever 53 whose upper end is assembled movably at lower ends of the arms 21 and 22, and the second link lever 54 whose lower end is assembled movably at the brackets 11 of the document stage 10 and whose upper end is assembled movably at a lower end of the first link lever 53.

The rod 52 is pressed for the ends of the arms 21 and 22 by a first tension spring 55, so that an upper end of the rod 52 touches and pushes the locking lever 51.

Also, the rod 52 has a projection 52a at a lower end, the projection 52a to push the upper end of the first link lever 53.

The link levers 53 and 54 are pressed by the second tension spring 56, so that a connection of the link levers 53 and 54 can be bent toward the lower ends of the arms 21 and 22. The second link lever 54 has a stopper 54a at the upper end. The stopper 54a touches the lower end of the first link lever 53, thus preventing bending movement of the connection of the link levers 53 and 54 toward the lower ends of the arms 21 and 22. Accordingly, the link levers 53 and 54 can be held standing at a predetermined angle relative to the document stage 10.

According to the above structure of the locking mechanism 50, when the arms 21 and 22 are folded down to the document stage 10, the locking levers 51 engages with the concaves 10a and are pressed by the first tension springs 55 via the rods 52 toward the concaves 10a, so that the U-shaped frame 20 can be held locked.

In this state, the connection of the link levers 53 and 54 are bent toward the upper ends of the arms 21 and 22.

When upper portions of the locking levers 51 are pushed, the lock levers 51 disengage from the concaves 10a, so that the U-shaped frame 20 can be raised from the document stage 10. Then, when the U-shaped frame 20 is moved upward to raise the arms 21 and 22, the connection of the link levers 53 and 54 move toward the lower ends of the arms 21 and 22. When the stopper 54a touches the first link levers 53, the stopper 54a prevents bending movement of the connection of the link levers 53 and 54, so that the link levers 53 and 54 can be held standing by force of the second tension spring 56 and weights of the arms 21 and 22.

As a result thereof, the U-shaped frame 20 can be locked standing at a required angle relative to the document stage 10.

To unlock the U-shaped frame 20, the locking levers 51 are pushed.

When the locking lever 51 are pushed, the rod 52 moves against forces of the first tension springs 55 to move the first link levers 53 against forces of the second tension springs 56. As the first link levers 53 moves, the second link levers 54 also moves with the link levers 53, so that the connection of the link lever 53 and the link lever 54 moves toward up upper end of the arms 21,22. As a result thereof, the U-shaped frame 20 is unlocked to be movable to the document stage 10.

The arm 22 has a first power circuit 61 built therein, while the arm 21 has a second power circuit 62 and a second signal process circuit 63. The first power circuit 61 is used to obtain a direct current power of a required voltage from a commercial alternating-current power supply and to supply the obtained direct current power to the second power circuit 62 and a high frequency lighting circuit 64 built in the illuminator 40.

The first power circuit 61 is composed of a rectifier diode and a smoothing condenser for an input current, an oscillator, a high frequency transformer, a rectifier diode and a smoothing condenser for an output current, an amplifier transistor, a printed-circuit board, and the like. The second power circuit 62 is a DC-DC converter for converting the direct current power supplied from the first power circuit 61 to the direct current powers of plural voltages. In the present embodiment, the second power circuit 62 converts DC12V to DC5V, DC9V, DC15V, and DC20V.

The second signal process circuit 63 is used to convert a signal from the first signal process circuit 65 to a video signal.

The second signal process circuit 63 is composed of a synchronizing signal generation circuit for driving a solid image pickup element, a circuit for correcting an output signal from the first signal process circuit 65 and compositing a color signal and a luminance signal into a video signal, a printed-circuit board, and the like.

The plug 22a, the micro-switch 22c, the power switch 22b, and the first power circuit 61 are connected in series in turns. An end of an actuator 22d of the micro-switch 22c projects outwardly from an opening 22e provided in bottom of the arm 22, as illustrated in Fig.3 which is a partially cutaway view.

Accordingly, when the arm 22 is folded down to the document stage 10, the actuator 22d also touch the document stage 10, turning off the micro-switch 22c, so that the power switch 22b and the plug 22a is interrupted. As a result thereof, whether the power switch 22b is turned on or off, the power supply to the image input equipment can be interrupted on folding the arm 22 down to the document stage 10. If the power switch 22b is left on, the micro-switch 22c can be turned on to supply the power to the image input equipment the moment the arm 22 is raised from the document stage 10.

The camera head 30 consists of a body 31 and a pair of legs 32 and are of hollow structure which is composed by uniting an upper casing 30A with a lower casing 30B.

The camera head 30 has about the same breadth and thickness with a breadth and a depth of the space S1.

The body 31 has the solid image element 33 and the first signal process circuit 65 built therein. In the present embodiment CCD is used for the solid image element 33.

The first signal process circuit 65 comprises an integrated circuit for driving the solid image element 33, a sample-and-hold circuit for an output signal of the solid image pickup element 33, a circuit for separating an output signal of the sample-and-hold circuit into a luminance signal and a color signal, and a printed-circuit board.

Further, the body 31 has an optical system 34 mounted thereto so that the optical system 34 can be positioned between the legs 32, the optical system 34 to form an image of an object on the solid image pickup element 33. The optical system 34 has a zoom knob 34a and a focus ring 34b.

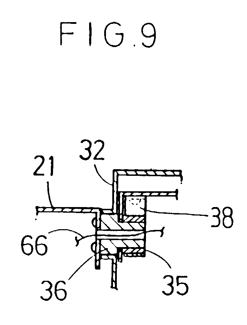

As illustrated in Fig.9, one of a pair of hollow shafts 36 fixed to the arm 21 is inserted into the leg 32, while a resin friction ring 35 is fixed to an outer surface of an inner end of the hollow shaft 36 and is pressed by a leaf spring 38, so that the camera head 30 is assembled movably at the ends of the arms 21 and 22 and held by a friction force generated by the leaf spring 38 and the ring 35 in a desired position relative to the arms 21 and 22. Accordingly, on folding the image input equipment, the camera head 30 can be held folded down into the space S1, while on setting the image input equipment the camera head 30 can be held in a standing position.

A wiring 66 is inserted into the hollow shaft 36, the wiring 66 for connecting the first signal process circuit 65 and the second signal process circuit 63.

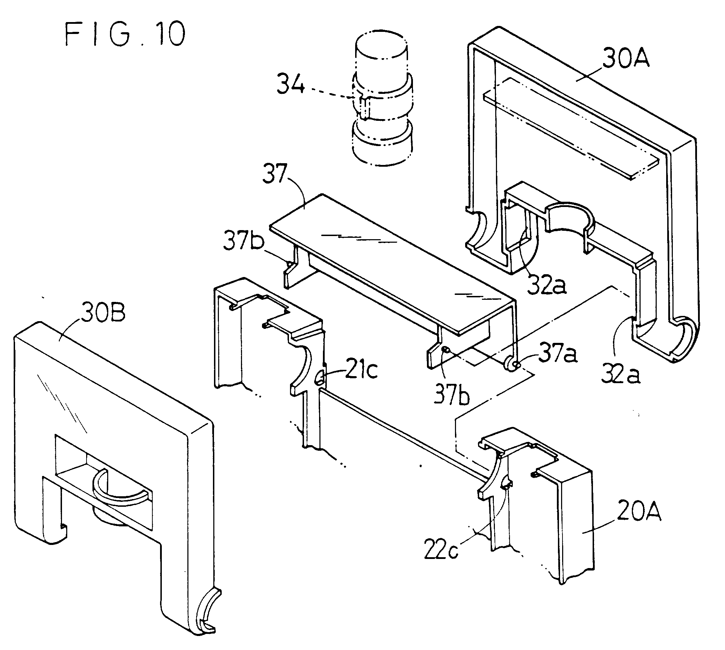

A lens cover 37 is mounted to the ends of the arms 21 and 22, the lens cover 37 to cover a lens opening of the optical system 34. The lens cover 37 (illustrated in Fig. 10) has a hook-shaped cross section and about the same breadth as the space S1. Further, the lens cover 37 have a pair of hinge pins 37a and a pair of guide pins 37b formed at both sides thereof. The hinge pins 37a are fitted into holes 21C and 22d formed in the upper frame 20A, so that the lens cover 37 is mounted movably to the ends of the arms 21 and 22.

Meanwhile, hook-shaped guides 32a are formed in the upper casing 30A.

The guide pins 37b engage slidably with the guides 32a.

According to the above structure, when the camera head 30 is folded down into the space S1, the lens cover 37 covers the lens opening. When the camera head 30 is raised, the guide pins 37 slide along the guides 32a, thereby moving the lens cover 37 to open the lens opening.

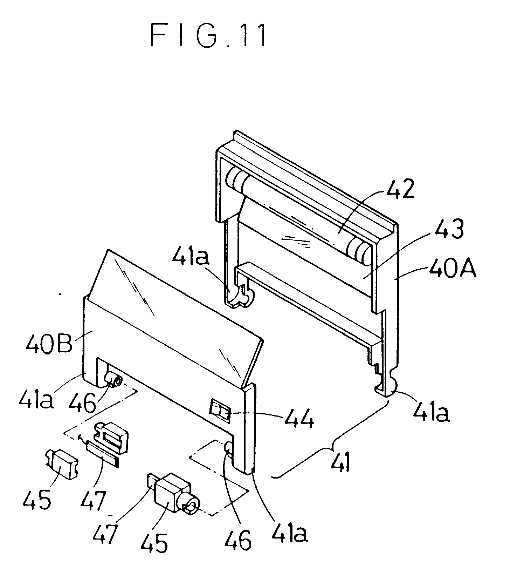

As illustrated in Fig.11, the illuminator 40 consists of a box-type casing 41 composed of an upper casing 40A and a lower casing 40B, the casing 41 having about the same breadth and thickness as a breadth and a depth of the space S1.

The upper casing 40A has a fluorescent lamp 42 and a reflecting plate 43 mounted to an upper inside thereof. The lower casing 40B has a lamp switch 44 provided on a surface thereof.

The casing 41 has a circuit provided in an inside thereof, the circuit which is a high frequency circuit 64 for lighting the fluorescent lamp 42.

The casing 41 has a pair of legs 41a at lower ends thereof, the legs 41a having hollow shafts 46 prjecting inwardly. The blocks 45 are fitted frictionally movably into the hollow shafts 46.

The blocks 45 have plugs 47 fixed therein. The plugs 47 are connected to the high frequency circuit 64 via wires inserted into the hollow shafts 46, while the fluorescent lamp 42 is connected to the high frequency circuit 64.

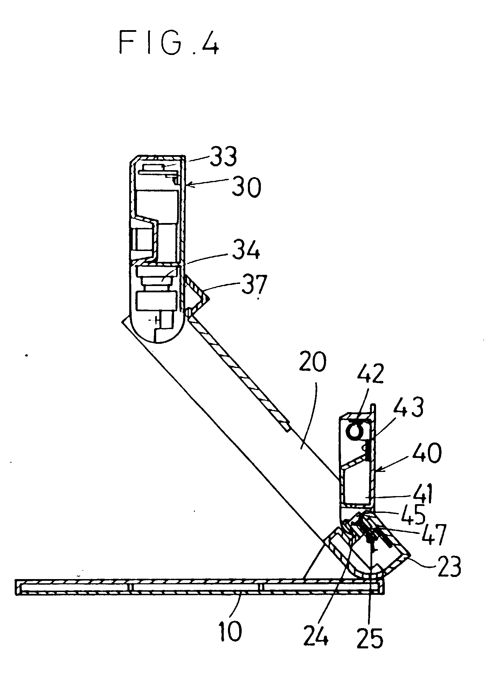

Meanwhile, as illustrated in Fig.4 and Fig.5, the base 23 of the U-shaped frame 20 has concavities 24 and plug receptacles 25 provided in an inside thereof, the concavities 24 into which the blocks 45 are to be detachably fitted, the plug receptacles 25 into which the plugs 47 are to be detachably fitted.

Accordingly, when the blocks 45 are fitted into the concavities 24 of the base 23, the illuminator 40 can be assembled detachably on the base 23 so as to be positioned movably between the arms 21 and 22. With this structure, on folding the image input equipment, the illuminator 40 can be folded down into the space S1 adjacent to the camera head 30.

On setting the image input equipment, the illuminator 40 can be raised from the space S1 and the fluorescent lamp 42 can be directed at a required angle toward an object put on the document stage 10.

As illustrated in Fig.2, the first power circuit 61, the lamp switch 44, the high frequency circuit 64 are connected in series in turns.

Therefore, the lamp switch 44 can be operated to turn on or off the fluorescent lamp 42.

According to the above structure of the present embodiment, the camera head 30 and the illuminator 40 are folded down into the space S1 and the U-shaped frame 20 is folded down to the document stage 10, as illustrated in Fig.6 and Fig.7. In this state, the actuator 22d of the micro-switch 22c touches the document stage 10, turning off the micro-switch 22c. Thus, the power supply to the image input equipment is interrupted even if the power switch 22b is turned on and the power cord is connected to the plug 22a.

To set up the image input equipment, first, the U-shaped frame 20 is raised from the document stage 10 and is locked in a standing position by the locking mechanism 50. Secondly, the camera head 30 folded down into the space S1 is raised from the ends of the arms 21 and 22 to be vertical to the document stage 10, so that the lens opening of the optical system 34 is directed to the object put on the document stage 10. And the lens cover 37 is removed from the lens opening with movement of the camera head 30.

Thirdly, the illuminator 40 is raised at a required standing angle from the space S1.

The required standing angle of the illuminator 40 should be adjusted so that an image of the fluorescent lamp 42 reflected by the object may not enter directly into the optical system 34, that is, so that the fluorescent lamp 42 can be positioned outside an angle of field of the optical system 34, as illustrated with dashed lines in Fig.3.

With such a series of operations, the image input equipment can be set up.

Next, the object is put on the stage, such as a book, a pamphlet, and chart. Then, the power switch 22b and the lamp switch 44 are turned on.

With the object illuminated by the illuminator 40, the image of the object is picked up and converted to a video signal by the camera head 30, and the video signal is sent to a monitor television, and the image of the object is projected onto the monitor television. To pick up the image of an extra-long object, a passage S2 between the document stage 10 and the U-shaped frame 20 can be used. Through the passage S2, the object is sent outside the document stage 10 so that the image of the extra-long object can be picked up.

According to the structure of the present embodiment, a pair of the arms 21 and 22 compart the space S1, into which the camera head 30 and the illuminator 40 are to be folded down. Therefore, the arms 21 and 22, the camera head 30, the illuminator 40, and the document stage 10 can be incorporated into one body to be folded into a substantially flat shape.

This results in convenience for carrying and storing the image input equipment. Upon folding the arms 21 and 22, the micro-switch 22c operates to interrupt the power supply to the image input equipment, thereby preventing unneeded power consumption and degradation of electric components caused by leaving the power switch 22b on. This can ensure a high safety and durability.

In addition, if the power switch 22b is left on during folding of the arms 21 and 22, then the micro-switch 22c can be turned on upon raising the arms 21 and 22. This leads to an easy operation.

Further, while the image input equipment is folded up, the arms 21 and 22, the camera head 30, and the illuminator 40 cover the document stage 10, thus protecting the document stage 10 on carrying and storing the image input equipment.

As illustrated in Fig.5, since the illuminator 40 can be detached from the U-shaped frame 20, the image input equipment becomes light in weight, while the space S1 can be used to contain accessories, such as a power cord.

Further, the lens cover 37 can open and close with movement of the camera head 30, which causes an easy operation.

The arms 21 and 22 are of hollow structures and have the circuits 61, 62, and 63 built therein. Accordingly, no circuits are needed in the document stage 10, so that the document stage 10 becomes thin in shape. Thus, the document stage 10 and a table on which the document stage 10 is to be put forms a substantially even surface.

Therefore, even an extra-large object which does not fit the document stage 10, such as an open book, do not deviate down from the document stage 10 under influence of its weight. Therefore, the extra-large object can be picked up easily.

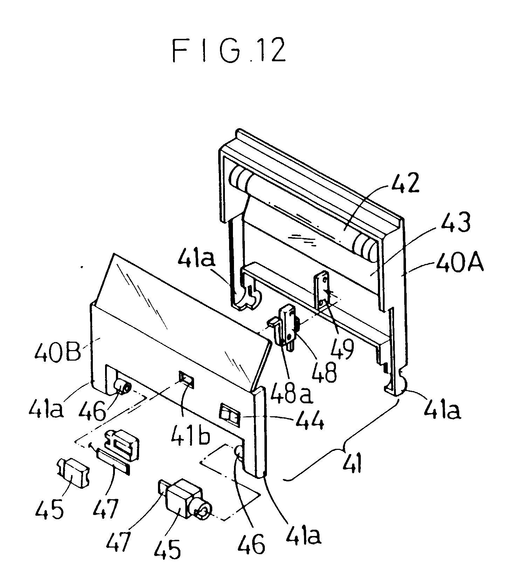

Referring next to Fig.12, there is shown therein a second embodiment of the illuminator 40.

When using the illuminator 40 of the second embodiment, a micro-switch 48 is substituted for the micro-switch 22c.

The micro-switch 48 is mounted to the upper casing 40A of the illuminator 40 by a bracket 49 and is connected in series with the lamp switch 44. An opening 41b is formed in the lower casing 40B of the illuminator 40, while an end of the actuator 48a projects outward from the opening 41b.

According to this structure of the second embodiment, when the illuminator 40 and the camera head 30 are folded down into the space S1 and the arms 21 and 22 are folded down to the document stage 10, the actuator 48a touches the document stage 10, turning off the micro-switch 48.

Accordingly, the power supply to the illuminator 40 can be automatically interrupted even when the power switch 22b and the lamp switch 44 are left on.

Meanwhile, if the micro-switch 48 is connected in series with the plug 22a and the power switch 22b, the power supply to the image input equipment can be automatically interrupted on folding the image input equipment.

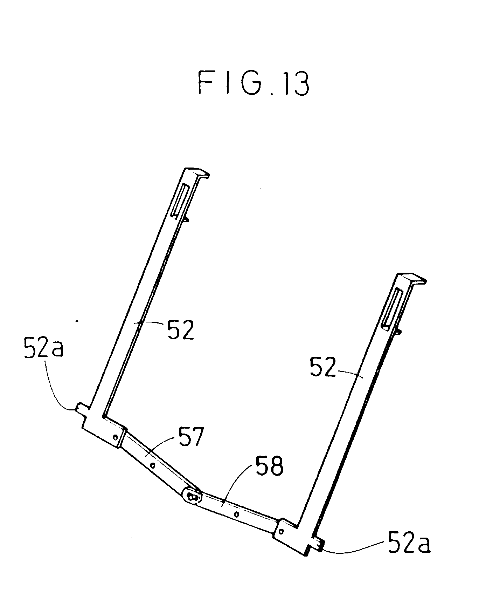

Refering to Fig.13, there is shown therein a second embodiment of the locking mechanism 50.

According to the second embodiment, the right and the left rods 52 are connected by the link levers 57 and 58. Therefore if either of the locking levers 51 is pushed, the both rods 52 can be also moved, so that the U-shaped frame 20 can be unlocked. This results in an easy operation.

The features disclosed in the foregoing description, in the claims and/or in the accompanying drawings may, both, separately and in any combination thereof, be material for realising the invention in diverse forms thereof.

## Claims

1. A portable image input equipment comprising a camera head (30) having an optical system (34) and an image pickup means converting an optical image of an object to a video signal, a document stage (10) on which the object is to be put, a pair of arms (21, 22) assembled movably on the document stage (10) to be folded down to the document stage (10) and to be raised from the document stage (10), and a space (S1) between the arms, whereby the camera head (30) is mounted movably on the upper ends of the arms (21, 22) to be folded down into said space (S1) and be raised from said space (S1), and an illuminator (40) for illuminating the object, said illuminator being adapted to be folded down when folding the image input equipment and to be raised when setting the image input equipment, characterized in that the illuminator (40) is mounted to a base (23) connecting the lower ends of the arms (21, 22), so that the illuminator (40) is adapted to fold into said space (S1) in a position adjacent to the camera head (30).

2. The portable image input equipment according to claim 1, wherein the illuminator (4) is assembled detachably on the base (23).

3. The portable image input equipment according to the claim 2, wherein at least one of the arms (21, 22) is of a hollow structure and has electric components (61 - 66) of the image input equipment built in it.

4. The portable image input equipment according to claim 1, wherein a locking mechanism (50) is provided, the locking mechanism (50) to lock the arms (21, 22) in a folding position or in a standing position relative to the document stage (10).

5. The portable image input equipment according to claim 1, wherein a switching means (22c, 22) is provided, for interrupting power supply to the image input equipment by operating the switching means (22c, 22d) due to a folding movement of the arms (21, 22) in the direction of the document stage (10).

6. The portable image input equipment according to the claim 1, wherein a switching means (22c, 22d) is provided, for interrupting power supply to the image input equipment by operating the switching means (22c, 22d) due to a folding movement of the illuminator (4) in the direction of the document stage (10).

## Patentansprüche

1. Tragbares Bildeingabegerät, das einen Kamerakopf (30) mit einem optischen System 34 und einer Bildaufnahmeeinrichtung, welche ein optisches Bild eines Gegenstandes in ein Videosignal umwandelt, einen Dokumententisch (10), auf den der Gegenstand gelegt wird, ein Paar Arme (21, 22), die bewegbar an dem Dokumententisch (10) angebracht sind, so daß sie auf den Dokumententisch (10) geklappt und von dem Dokumententisch (10) angehoben werden können, und einen Raum (S1) zwischen den Armen aufweist, wobei der Kamerakopf (30) bewegbar auf den oberen Enden der Arme (21, 22) angebracht ist, so daß er in den Raum (S1) geklappt und von dem Raum (S1) angehoben werden kann, und mit einer Beleuchtungseinheit (40) zum Beleuchten des Gegenstandes, wobei die Beleuchtungseinheit so ausgelegt ist, daß sie heruntergeklappt ist, wenn das Bildeingabegerät zusammengeklappt ist, und angehoben ist, wenn das Bildeingabegerät aufgestellt ist, dadurch gekennzeichnet, daß die Beleuchtungseinheit (40) an einer Basis (23) angebracht ist, die die unteren Enden der Arme (21, 22) verbindet, so daß die Beleuchtungseinheit (40) so ausgelegt ist, daß sie in den Raum (S1) in eine Position nahe dem Kamerakopf (30) geklappt werden kann.

2. Tragbares Bildeingabegerät nach Anspruch 1, bei dem die Beleuchtungseinheit (40) lösbar auf der Basis (23) angebracht ist.

3. Tragbares Bildeingabegerät nach Anspruch 2, bei dem wenigstens einer der Arme (21, 22) eine Hohlstruktur hat, in die elektrische Komponenten (61 - 66) des Bildeingabgerätes eingebaut sind.

4. Tragbares Bildeingabegerät nach Anspruch 1, bei dem ein Verriegelungsmechanismus (50) vorgesehen ist, wobei der Verriegelungsmechanismus (50) die Arme (21, 22) in einer geklappten Position oder in einer stehenden Position relativ zu dem Dokumententisch (10) verriegelt.

5. Tragbares Bildeingabegerät nach Anspruch 1, bei dem eine Schalteinrichtung (22c, 22d) vorgesehen ist, um die Energiezufuhr zu dem Bildeingabegerät zu unterbrechen, indem die Schalteinrichtung (22c, 22d) aufgrund einer Klappbewegung der Arme (21, 22) in die Richtung des Dokumententisches (10) betätigt wird.

6. Bildeingabegerät nach Anspruch 1, bei dem dieSchalteinrichtung (22c, 22d) vorgesehen ist, um die Energiezufuhr zu dem Bildeingabegerät zu unterbrechen, indem die Schalteinrichtung (22c, 22d) aufgrund einer Klappbewegung der Beleuchtungseinheit (40) in die Richtung des Dokumententisches (10) betätigt wird.

## Revendications

1. Appareil portable d'acquisition d'image comprenant une tête de caméra (30) comportant un système optique (34) et des moyens de prise de vue convertissant une image optique d'un objet en un signal vidéo, une platine pour document (10) sur laquelle doit être posé l'objet, une paire de bras (21, 22) assemblés en pouvant se mouvoir sur la platine pour document (10) de manière à être repliés vers le bas sur la platine pour document (10) et à être relevés depuis la platine pour document (10), et un espace (S1) compris entre les bras, de sorte que la tête de caméra (30) est montée en pouvant se mouvoir sur les extrémités supérieures des bras (21, 22) de manière à être repliée vers le bas dans le dit espace (S1) et à être relevée depuis le dit espace (S1), et une source lumineuse (40) pour illuminer l'objet, la dite source lumineuse étant conçue de manière à être repliée vers le bas lors du repliage de l'appareil d'acquisition d'image et à être relevée lors du réglage de l'appareil d'acquisition d'image, caractérisé en ce que la source lumineuse (40) est montée sur une embase (23) raccordant les extrémités inférieures des bras (21, 22), de sorte que la source lumineuse (40) est conçue de manière à être repliée dans le dit espace (S1) dans une position adjacente à la tête de caméra (30).

2. Appareil portable d'acquisition d'image selon la revendication 1, dans lequel la source lumineuse (4) est assemblée de manière à être amovible sur l'embase (23).

3. Appareil portable d'acquisition d'image selon la revendication 2, dans lequel au moins l'un des bras (21, 22) a une structure creuse et possède des composants électriques (61 - 66) de l'appareil d'acquisition d'image qui sont lui sont intégrés.

4. Appareil portable d'acquisition d'image selon la revendication 1, dans lequel est prévu un mécanisme de verrouillage (50), le mécanisme de verrouillage (50) étant destiné à verrouiller les bras (21, 22) dans une position de repliage ou dans une position dressée par rapport à la platine pour document (10).

5. Appareil portable d'acquisition d'image selon la revendication 1, dans lequel sont prévus des moyens de commutation (22c, 22d), pour interrompre l'alimentation en énergie électrique de l'appareil d'acquisition d'image par l'actionnement des moyens de commutation (22c, 22d) consécutif à un mouvement de repliage des bras (21, 22) en direction de la platine pour document (10).

6. Appareil portable d'acquisition d'image selon la revendication 1, dans lequel sont prévus des moyens de commutation (22c, 22d), pour interrompre l'alimentation en énergie électrique de l'appareil d'acquisition d'image par l'actionnement des moyens de commutation (22c, 22d) consécutif à un mouvement de repliage de la source lumineuse (4) en direction de la platine pour document (10).
